# EUROPÄISCHE PATENTSCHRIFT

(11) **EP 2 748 575 B1**
(45) Veröffentlichungstag und Bekanntmachung des Hinweises auf die Patenterteilung: **21.02.2018**
(21) Anmeldenummer: 12758403.5
(22) Anmeldetag: 23.08.2012
(51) Int. Cl.: G01L 19/00, G01L 19/06

(54) **MEMBRANSENSOR MIT EINEM STRÖMUNGSTEILER**
MEMBRANE SENSOR HAVING A FLOW DIVIDER
CAPTEUR À MEMBRANE POURVU D'UN DIVISEUR D'ÉCOULEMENT

(30) Priorität: 24.08.2011 DE 102011110951
(43) Veröffentlichungstag der Anmeldung: 02.07.2014
(73) Patentinhaber: Marquardt Mechatronik GmbH, 78604 Rietheim-Weilheim (DE)
(72) Erfinder: WEISSER, Dietmar, 78532 Tuttlingen (DE); SCHEITER, Markus, 78573 Wurmlingen (DE)
(74) Vertreter: Otten, Roth, Dobler & Partner mbB Patentanwälte
(86) Internationale Anmeldenummer: PCT/EP2012/003564
(87) Internationale Veröffentlichungsnummer: WO 2013/026572

(56) Entgegenhaltungen:
- WO-A1-2008/071022
- DE-A1-102010 022 428
- US-A1- 2005 160 828
- US-A1- 2006 027 025
- US-B1- 6 550 338

## Beschreibung

Die Erfindung betrifft eine Messvorrichtung nach dem Oberbegriff des Patentanspruchs 1.

Bei der Messvorrichtung kann es sich um einen Sensor, wie einen Drucksensor zur Messung des Drucks eines Fluids, handeln. Solche Messvorrichtungen dienen vor allem zur direkten Messung einer Messgröße, wie von Betriebsparametern, in einem ruhenden und/oder strömenden Fluid. Beispielsweise kann es sich dabei um einen Niedrigdrucksensor für die Waschmitteldosierung in einer Waschmaschine, also für die Dosierung von zähflüssigen Medien, handeln.

Es sind derartige Messvorrichtungen mit einem Gehäuse bekannt, wobei im Gehäuse eine Kammer für das Fluid befindlich ist. An der Kammer ist ein Zuführanschluss für die Zuführung des Fluids in die Kammer sowie ein Abführanschluss für die Abführung des Fluids aus der Kammer angebracht. Solche Messvorrichtungen zur Messung des Druckes des Fluids sind in der WO 2008/071022 A1, in der US 2005/160828 A1 und in der US 6 550 338 B1 gezeigt.

Desweiteren ist bei der Messvorrichtung nach der DE 10 2010 022 428 A1 in und/oder an der Kammer eine Membran angeordnet, wobei ein Signalgeber mit der Membran in Wirkverbindung steht. Das in der Kammer befindliche Fluid wirkt auf die Membran auslenkend ein. Mit dem Signalgeber wirkt ein Signalaufnehmer zur Erzeugung des Messsignals derart zusammen, dass ein zur Auslenkung der Membran korrespondierendes Signal vom Signalaufnehmer erzeugbar ist. Es hat sich nun herausgestellt, dass vor allem bei zähflüssigen Fluiden Anlagerungen von Feststoffen im Sensor auftreten können, was wiederum zur Verfälschung des Messsignals führen kann.

Der Erfindung liegt die Aufgabe zugrunde, die Messvorrichtung derart auszugestalten, dass einer Verfälschung des Messsignals entgegen gewirkt wird. Insbesondere soll ein Drucksensor mit direktem Medienkontakt, der für zähflüssige Medien für den Druckbereich von 0 bis in etwa 5 kPa, was einer Wassersäule von ca. 0,5 m entspricht, geschaffen werden.

Diese Aufgabe wird bei einer gattungsgemäßen Messvorrichtung durch die kennzeichnenden Merkmale des Anspruchs 1 gelöst.

Bei der erfindungsgemäßen Messvorrichtung ist ein Strömungsteiler in der Kammer angeordnet. Der Strömungsteiler bewirkt eine Aufteilung der vom Zuführanschluss in die Kammer einströmenden Fluidströmung in wenigstens zwei Teilströmungen, derart dass die am Abführanschluss aus der Kammer ausströmenden Teilströmungen die Membran und/oder die Kammer beim Durchströmen der Kammer umspülen. Vorteilhafterweise ist damit die Ankopplung der dann als Strömungskammer dienenden Kammer an das Medium so gestaltet, dass eine Durchspülung des Sensors gewährleistet ist. Damit ist sichergestellt, dass kein Festsetzen von Feststoffen im Sensor erfolgen kann. Weitere Ausgestaltungen der Erfindung sind Gegenstand der Unteransprüche.

In einer einfachen und kostengünstigen Ausgestaltung bestehen der Signalgeber aus einem Magnet, und zwar insbesondere aus einem Permanentmagnet, sowie der Signalaufnehmer aus einem mit dem Magnet zusammenwirkenden Postionssensor, und zwar insbesondere aus einem Hallsensor. Entsprechend des Drucks, den das Fluid in der Kammer ausübt, wird die Membran und/oder der Signalgeber bewegt. Die Membran und/oder der Signalgeber ist mittels eines elastischen Elements rückstellbar. Zweckmäßigerweise ist das elastische Element in der Art einer Blattfeder, und zwar insbesondere als flache Spiralfeder, ausgebildet.

Zwecks einfacher Montage der Messvorrichtung besteht das Gehäuse aus einem Gehäusekörper in der Art eines Sockels und einem Gehäuseeinsatz in der Art eines Deckels. Der Gehäuseeinsatz kann am Gehäusekörper mittels einer Rast- und/oder Schnappverbindung befestigt sein. Desweiteren kann die Membran am Übergang zwischen dem Gehäusekörper und dem Gehäusedeckel befindlich sein. Es kann sich dabei anbieten, dass die Membran zwischen dem Gehäusekörper und dem Gehäuseeinsatz randseitig eingeklemmt ist, und zwar bevorzugterweise derart, dass der Gehäuseeinsatz im wesentlichen abgedichtet am Gehäusekörper befestigt ist.

Der Kompaktheit halber kann die Kammer sowie gegebenenfalls der Zuführ- und/oder der Abführanschluss im Gehäuseeinsatz in der Art einer Strömungskammer angeordnet sein. Desweiteren bietet es sich an, dass der Signalaufnehmer im Gehäusekörper, beispielsweise auf einer Leiterplatte, angeordnet ist. Mit dem Signalaufnehmer kann eine Auswerteelektronik in elektrischer Verbindung stehen. Die Auswerteelektronik kann einen Mikrocontroller, einen Mikroprozessor o. dgl. umfassen, um dadurch eine große Funktionalität zu bieten. Zwecks weitergehender Kompaktheit kann die Auswerteelektronik im Signalaufnehmer in der Art eines ASIC's integriert sein.

In einfacher Ausgestaltung besitzt die Kammer eine im wesentlichen zylinderförmige Gestalt. Der Zuführ- sowie der Abführanschluss können an der Mantelfläche des Zylinders angeordnet sein. Um eine weitgehend ungestörte Strömung des Fluids zu gewährleisten, können der Zuführ- sowie der Abführanschluss einander mit einem Winkel von in etwa 180° gegenüberliegend angeordnet sein. In kompakter Ausgestaltung kann die Membran an der einen, dem Gehäusekörper zugewandten Deckelfläche des Zylinders angeordnet sein.

Um eine besondere Effizienz zu bieten, kann der Strömungsteiler als eine in der Kammer angeordnete Ausbauchung ausgestaltet sein. Die Ausbauchung kann wiederum eine kuppelartige Gestalt besitzen, wodurch die Teilströmungen die Membran und/oder die Kammer im wesentlichen ringförmig umspülen. Der Einfachheit halber kann die Ausbauchung von der anderen, dem Gehäusekörper abgewandten Deckelfläche des Zylinders abragen. Ein derartiger Strömungsteiler ist folglich in besonderer Weise der Geometrie der im Querschnitt kreisförmigen Kammer angepasst.

Ein besonders effektiv wirkender Strömungsteiler umfasst eine in die Kammer ragende Rippe. Bevorzugterweise ist die Rippe an der Ausbauchung angeordnet. Dabei kann die Rippe im wesentlichen in Verlängerung des Zuführanschlusses ausgerichtet sein. Desweiteren kann die Rippe eine dem Zuführanschluss zugewandte Kante aufweisen. Eine solche Ausgestaltung gewährleistet die zuverlässige Ausbildung der Teilströmungen.

Zwecks nochmaliger Steigerung der Effektivität kann der Strömungsteiler eine weitere, dem Abführanschluss zugeordnete Rippe umfassen. Zweckmäßigerweise ist die weitere Rippe ebenfalls an der Ausbauchung angeordnet. Die weitere Rippe kann winklig zur Verlängerung des Abführanschlusses ausgerichtet sein, und zwar insbesondere derart dass die Rippe und die weitere Rippe eine Art von sternförmigen Diffusor für die Teilströmungen bilden. Eine solche Ausgestaltung gewährleistet, dass die Teilströmungen die Membran und/oder die Kammer im wesentlichen vollständig umspülen.

Eine zusätzliche Funktionalität besitzt der Strömungsteiler, wenn der Strömungsteiler wenigstens einen der Membran zugewandten Auflagepunkt aufweist, derart dass die Membran an dem Auflagepunkt bei negativem Druck in ihrem Hub begrenzt wird. Die Schutzfunktion für die Membran lässt sich noch weiter verbessern, indem der Strömungsteiler drei Auflagepunkte an den Rippen für die Membran aufweist.

Für eine besonders bevorzugte Ausgestaltung ist nachfolgendes festzustellen. Es wird eine Teilung des Medienflusses in zwei Teilströme vorgenommen. Die Kontur des Deckels ist so gestaltet, dass sich das Medium teilt und ringförmig um die Membran fließt. Somit wird verhindert, dass sich Ablagerungen bilden, welche die Membran mit dem Deckel verkleben. Desweiteren sind Auflagepunkte für die Membran bei Unterdruck geschaffen. Hierzu kann die Teilungsstruktur so ausgelegt werden, dass sie gleichzeitig als Begrenzung für negative Drücke dient. In diesem Fall wird die Membran an den drei Auflagepunkten in ihrem Hub begrenzt.

Die mit der Erfindung erzielten Vorteile bestehen insbesondere darin, dass die Betriebssicherheit der Messvorrichtung erhöht wird und auch eine Verfälschung des Messsignals verhindert wird. Außerdem wird der Einsatz des Drucksensors, der besonders kostengünstig ist, in der zähflüssige Medien verwendenden Waschmitteldosierung ermöglicht.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen Drucksensor in Draufsicht, wobei der Gehäusekörper abgenommen ist,
- Fig. 2: einen Schnitt entlang der Linie 2-2 in Fig. 1, wobei der Gehäusekörper aufgesetzt ist,
- Fig. 3: einen Schnitt entlang der Linie 3-3 in Fig. 2,
- Fig. 4: den Gehäuseeinsatz als Einzelteil,
- Fig. 5: einen Schnitt entlang der Linie 5-5 in Fig. 2,
- Fig. 6: den Schnitt aus Fig. 5, wobei der Gehäusekörper abgenommen ist,
- Fig. 7: einen Schnitt entlang der Linie 7-7 in Fig. 2 und
- Fig. 8: den Schnitt aus Fig. 7, wobei der Gehäusekörper abgenommen ist.

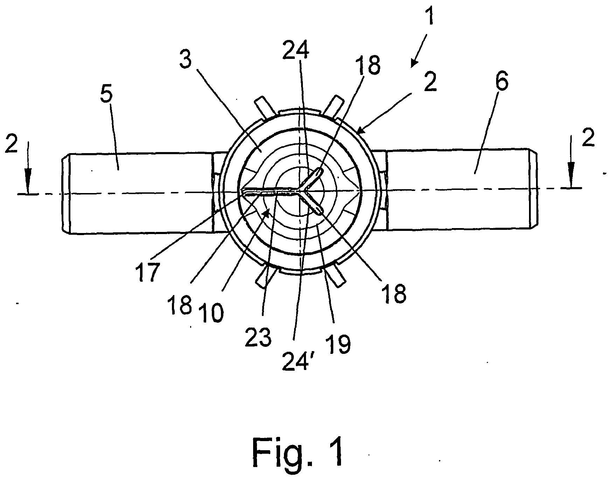

In Fig. 1 ist eine Messvorrichtung 1 zu sehen, die als Drucksensor für die Dosierung von Waschmittel in einer Waschmaschine dient. Bei dem Waschmittel handelt es sich um ein zähflüssiges Medium, das als Fluid von einem Vorratsbehälter durch den Drucksensor 1 zum Waschbottich strömt, solange bis die gewünschte Dosierung erreicht ist. Die Dosierung des Waschmittels erfolgt anhand des vom Fluid ausgeübten Drucks. Anhand des Drucks kann der jeweilige Füllstand im Vorratsbehälter und dadurch die aus dem Vorratsbehälter entnommene Menge an Waschmittel ermittelt werden. Der Druck des Fluids stellt somit die von der Messvorrichtung 1 gemessene Messgröße dar.

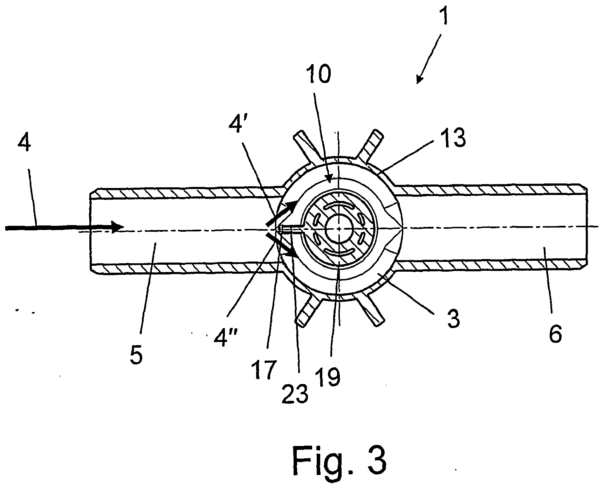

Der Drucksensor 1 besitzt ein Gehäuse 2, wobei sich im Gehäuse 2 eine Kammer 3 für das Fluid 4 (siehe Fig. 3) befindet. An der Kammer 3 befindet sich ein Zuführanschluss 5 für die Zuführung des Fluids 4 in die Kammer 3 sowie ein Abführanschluss 6 für die Abführung des Fluids aus der Kammer 3. Während der Phase der Dosierung des Waschmittels durchströmt das Fluid 4 als ein Fluidstrom (siehe Fig. 3) die Kammer 3, so dass die Kammer 3 als eine Strömungskammer dient.

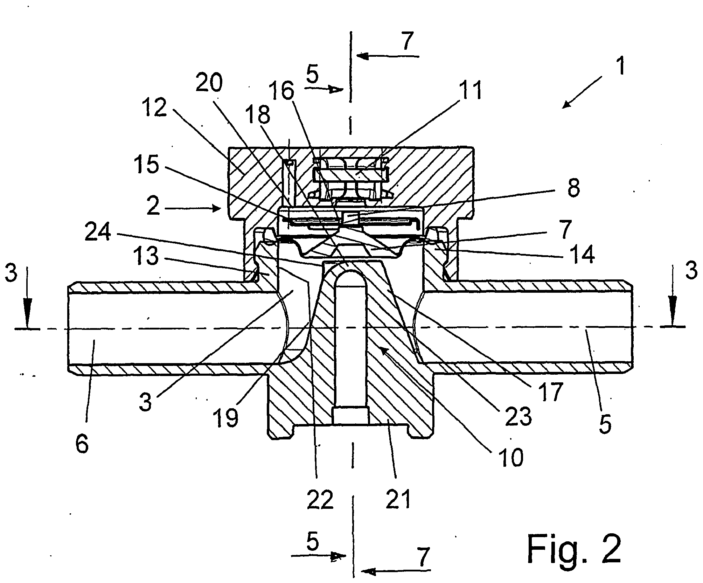

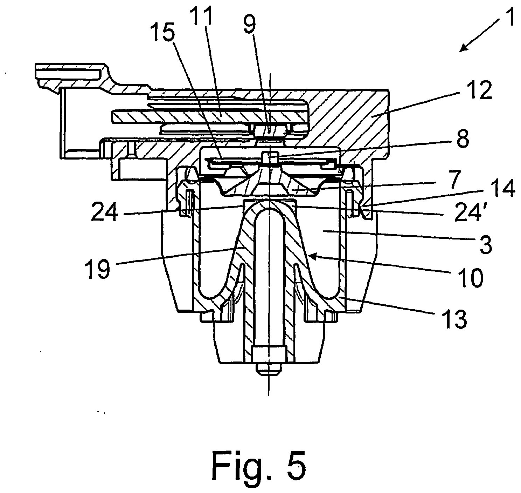

Wie man weiter anhand von Fig. 2 sieht, ist in und/oder an der Strömungskammer 3 eine Membran 7 angeordnet. Ein Signalgeber 8, der mit der Membran 7 in Wirkverbindung steht, wirkt mit einem in Fig. 5 sichtbaren Signalaufnehmer 9 zusammen. Der Signalaufnehmer 9 erzeugt ein zur Stellung des Signalgebers 8, die entsprechend der Auslenkung der Membran 7 aufgrund des vom Fluid 4 in der Kammer 3 ausgeübten Drucks eingenommen wird, korrespondierendes Signal, aus dem wiederum der in dem Fluid 4 herrschende Druck ermittelbar ist.

In der Strömungskammer 3 ist ein dem Zuführanschluss 5 zugewandter Strömungsteiler 10 angeordnet, der gemäß Fig. 3 zur Aufteilung der vom Zuführanschluss 5 in die Strömungskammer 3 einströmenden Fluidströmung 4 in wenigstens zwei Teilströmungen 4', 4" dient. Die Teilströmungen 4', 4" fließen durch die Strömungskammer 3 und strömen dann am Abführanschluss 6 aus der Strömungskammer 3 aus. Beim Durchströmen der Strömungskammer 3 umspülen die Teilströmungen 4', 4" die Membran 7 und/oder die Strömungskammer 3 im wesentlichen vollständig, so dass im Fluidstrom 4 befindliche Feststoffe sich nicht an der Membran 7 und/oder in der Strömungskammer 3 absetzen können.

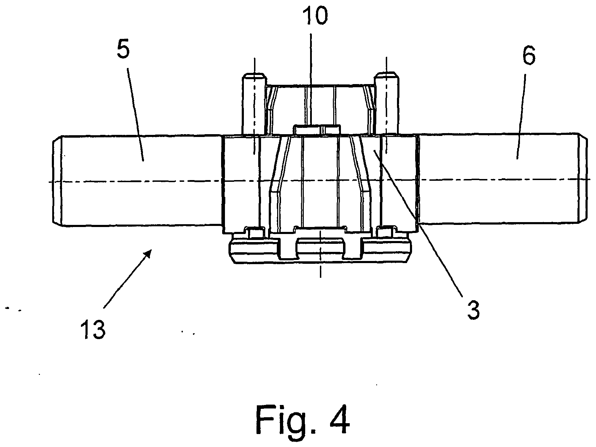

Wie man anhand der Fig. 2 erkennt, besteht das Gehäuse 2 aus einem Gehäusekörper 12 in der Art eines Sockels und einem Gehäuseeinsatz 13 in der Art eines Deckels. Der Gehäusedeckel 13 ist am Gehäusekörper 12 mittels einer Rast- und/oder Schnappverbindung befestigt, wozu der Gehäusedeckel 13 einen entsprechenden Rastring 14 aufweist. Die Strömungskammer 3 mitsamt dem Strömungsteiler 10 sowie der Zuführanschluss 5 und der Abführanschluss 6 sind im Gehäusedeckel 13 angeordnet. Der Gehäusedeckel 13 ist als Einzelteil in Fig. 4 näher zu sehen.

Wie man weiter der Fig. 2 entnimmt, ist die Membran 7 und/oder der Signalgeber 8 mittels eines elastischen Elements 15 rückstellbar. Das elastische Eleinent 15 ist in der Art einer Blattfeder, die insbesondere als flache Spiralfeder ausgebildet ist, ausgestaltet. Vorliegend besteht der Signalgeber 8 aus einem Magnet, und zwar aus einem Permanentmagnet. Bei dem Signalaufnehmer 9 handelt es sich um einen Positionssensor, und zwar um einen Hallsensor. Zur Erzeugung des Messsignals wirken somit der Magnet 8 und der Hallsensor 9 magnetisch zusammen. Die Blattfeder 15 besitzt eine zentrische Vertiefung 16 zur Aufnahme des Magneten 8.

Mit dem Signalaufnehmer 9 steht eine einen Mikrocontroller, einen Mikroprozessor o. dgl. umfassende Auswerteelektronik in elektrischer Verbindung, die aus dem Messsignal den im Fluid 4 herrschenden Druck ermittelt und als Messgröße dann beispielsweise einem Steuergerät für die Dosierung des Waschmittels zuführt. Zweckmäßigerweise ist die Auswerteelektronik im Signalaufnehmer 9 in der Art eines ASIC's integriert. Das den Signalaufnehmer sowie die Auswerteelektronik umfassende ASIC 9 ist auf einer Leiterplatte 11 im Gehäusekörper 12 angeordnet.

Die Membran 7 schließlich ist am Übergang zwischen dem Gehäusekörper 12 und dem Gehäusedeckel 13 befindlich. Und zwar ist die Membran 7 zwischen dem Gehäusekörper 12 und dem Gehäusedeckel 13 randseitig eingeklemmt. Mittels der Membran 7 ist dadurch der Gehäusedeckel 13 im wesentlichen abgedichtet am Gehäusekörper 12 eingerastet befestigt. Wie man anhand der Fig. 1 und der Fig. 4 erkennt, besitzt die Strömungskammer 3 eine im wesentlichen zylinderförmige Gestalt. Der Zuführanschluss 5 sowie der Abführanschluss 6 sind an der in Fig. 2 sichtbaren Mantelfläche 22 des Zylinders angeordnet, und zwar gemäß Fig. 3 einander mit einem Winkel von in etwa 180° gegenüberliegend. Die Membran 7 wiederum ist an der einen, dem Gehäusekörper 12 zugewandten Deckelfläche 20 des Zylinders angeordnet, wie man in der Fig. 2 erkennt.

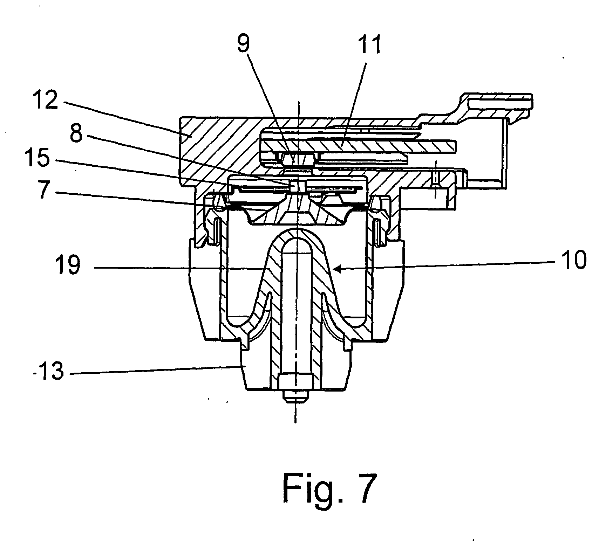

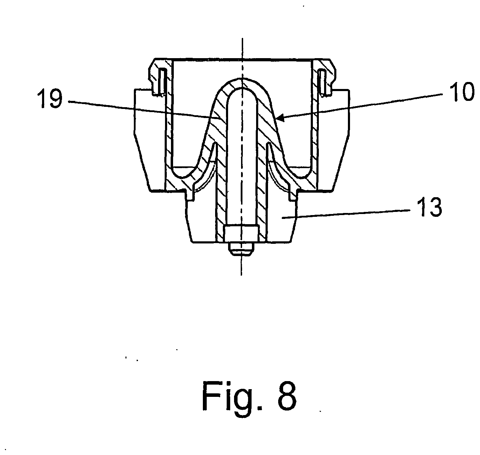

Die nähere Ausgestaltung des Strömungsteilers 10 ist in Fig. 5 bis Fig. 8 zu sehen. Der Strömungsteiler 10 ist als eine in der Strömungskammer 3 angeordnete Ausbauchung 19 ausgestaltet, wie anhand der Fig. 7 und Fig. 8 verdeutlicht ist. Die Ausbauchung 19 ragt von der anderen, dem Gehäusekörper 12 abgewandten Deckelfläche 21 (siehe Fig. 2) des Zylinders ab. Die Ausbauchung 19 besitzt eine kuppelartige Gestalt, so dass die Teilströmungen 4', 4" die Membran 7 und/oder die Strömungskammer 3 im wesentlichen ringförmig umspülen.

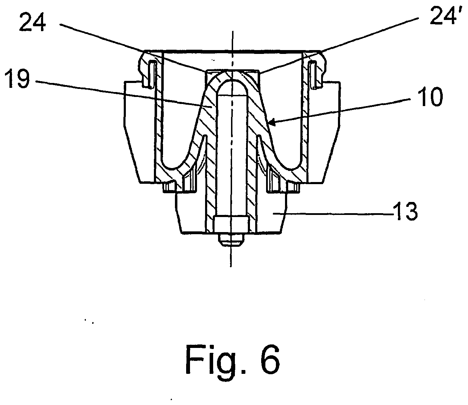

Weiterhin umfasst der Strömungsteiler 10 eine in die Strömungskammer 3 ragende Rippe 23, wie anhand der Fig. 3 zu erkennen ist. Gemäß Fig. 2 ist die Rippe 23 an der Ausbauchung 19 angeordnet. Und zwar ist die Rippe 23 entsprechend der Fig. 3 im wesentlichen in Verlängerung des Zuführanschlusses 5 ausgerichtet. Desweiteren weist die Rippe 23 eine dem Zuführanschluss 5 zugewandte Kante 17 auf. Die Rippe 23 bewirkt eine zuverlässige Aufteilung der Fluidströmung 4 in die Teilströmungen 4', 4". Wie in Fig. 1 weiter zu erkennen ist, umfasst der Strömungsteiler 10 eine weitere, dem Abführanschluss 6 zugeordnete Rippe 24, 24'. Die weitere Rippe 24, 24' ist gemäß Fig. 5 und Fig. 6 ebenfalls an der Ausbauchung 19 angeordnet. Gemäß Fig. 1 ist die weitere Rippe 24, 24' winklig zur Verlängerung des Abführanschlusses 6 ausgerichtet. Dadurch bilden die Rippe 23 und die weitere Rippe 24, 24' eine Art von sternförmigen Diffusor für die Teilströmungen 4', 4", so dass die Teilströmungen 4', 4" die Membran 7 und/oder die Kammer 3 im wesentlichen vollständig umspülen.

Vorliegend sind gemäß Fig. 1 eine Rippe 23 und zwei weiteren Rippen 24, 24' an der Ausbauchung 19 angeordnet, so dass der Strömungsteiler 10 eine kuppelförmige Gestalt mit einer in etwa "Dreiblock"-förmigen Struktur aufweist. Dem Zuführanschluss 5 ist eine Kante 17 der Rippe 23 zugewandt. Die Kante 17 unterstützt entsprechend der Fig. 3 die Aufteilung des Fluidstroms 4 in die Teilströmungen 4', 4". Aufgrund der Kuppelform der Ausbauchung 19 werden weitgehend ringförmige Teilströmungen 4', 4" erzeugt. Die "Dreiblock"-förmige Gestalt der Rippen 23, 24, 24' sorgt für eine weitgehende räumliche Abdeckung durch die Teilströmungen 4', 4". Insgesamt gewährleistet die Ausgestaltung des Strömungsteilers 10 eine gute sowie vollständige Umspülung der Strömungskammer 3 sowie der Membran 7.

Schließlich besitzt der Strömungsteiler 10 wenigstens einen der Membran 7 zugewandten Auflagepunkt 18, und zwar genauer aufgrund der "Dreiblock"-förmigen Gestalt der Rippen 23, 24, 24' drei Auflagepunkte 18. Dadurch wird die Membran 7 an den Auflagepunkten 18 bei negativem Druck in ihrem Hub begrenzt, womit eine diesbezügliche Beschädigung der Membran 7 verhindert ist.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann ein solcher Drucksensor 1 auch an sonstigen Hausgeräten, beispielsweise einer Geschirrspülmaschine zur Dosierung des Spülmittels, Verwendung finden. Im übrigen kann ein solcher Drucksensor 1 nicht nur für Hausgeräte sondern auch in sonstigen Anwendungen, beispielsweise zur Druck- und/oder Pegelmessung als Messgrößen eines strömenden und/oder ruhenden Fluids in der Labor- sowie in der chemischen Verfahrenstechnik eingesetzt werden.

### Bezugszeichen-Liste:

- 1:: Messvorrichtung / Drucksensor
- 2:: Gehäuse
- 3:: Kammer / Strömungskammer.
- 4:: Fluid / Fluidstrom / Fluidströmung
- 4',4":: Teilströmung
- 5:: Zuführanschluss
- 6:: Abführanschluss
- 7:: Membran
- 8:: Signalgeber / Magnet
- 9:: Signalaufnehmer / Hallsensor / ASIC
- 10:: Strömungsteiler
- 11:: Leiterplatte
- 12:: Gehäusekörper
- 13:: Gehäuseeinsatz / Gehäusedeckel
- 14:: Rastring
- 15:: elastisches Element / Blattfeder
- 16:: Vertiefung (in Blattfeder)
- 17:: Kante (an Strömungsteiler)
- 18:: Auflagepunkt (an Strömungsteiler)
- 19:: Ausbauchung
- 20,21:: Deckelfläche
- 22:: Mantelfläche
- 23:: Rippe
- 24,24':: (weitere) Rippe

## Patentansprüche

1. Messvorrichtung zur Messung einer Messgröße eines Fluids, insbesondere Drucksensor zur Messung des Drucks des Fluids, mit einem Gehäuse (2), mit einer im Gehäuse (2) befindlichen Kammer (3) für das Fluid (4), mit einem Zuführanschluss (5) an der Kammer (3) für die Zuführung des Fluids (4) in die Kammer (3) sowie mit einem Abführanschluss (6) an der Kammer (3) für die Abführung des Fluids (4) aus der Kammer (3), und mit einer in und/oder an der Kammer (3) angeordneten Membran (7), wobei das in der Kammer (3) befindliche Fluid auf die Membran (7) auslenkend einwirkt, wobei ein Signalgeber (8) mit der Membran (7) in Wirkverbindung steht, und wobei ein Signalaufnehmer (9) mit dem Signalgeber (8) derart zusammenwirkt, dass ein zur Auslenkung der Membran (7) korrespondierendes Signal vom Signalaufnehmer (9) erzeugbar ist, **dadurch gekennzeichnet, dass** ein Strömungsteiler (10) in der Kammer (3) zur Aufteilung der vom Zufübranschluss (5) in die Kammer (3) einströmenden Fluidströmung (4) in wenigstens zwei Teilströmungen (4', 4") angeordnet ist, derart dass die Teilströmungen (4', 4") die Membran (7) und/oder die Kammer (3) beim Durchströmen der Kammer (3) umspülen.

2. Messvorrichtung nach Anspruch 1, **dadurch gekennzeichnet, dass** der Signalgeber (8) aus einem Magnet besteht, dass vorzugsweise der Signalaufnehmer (9) aus einem Positionssensor, insbesondere aus einem Hallsensor, besteht, und dass die Membran (7) und/oder der Signalgeber (8) mittels eines in der Art einer Blattfeder, die insbesondere als flache Spiralfeder ausgebildet ist, ausgestalteten elastischen Elements (15) rückstellbar ist.

3. Messvorrichtung nach Anspruch 1 oder 2, **dadurch gekennzeichnet, dass** das Gehäuse (2) aus einem Gehäusekörper (12) in der Art eines Sockels und einem Gehäuseeinsatz (13) in der Art eines Deckels besteht, dass vorzugsweise der Gehäuseeinsatz (13) mittels einer Rast- und/oder Schnappverbindung am Gehäusekörper (12) befestigt ist, und dass weiter vorzugsweise die Membran (7) am Übergang zwischen dem Gehäusekörper (12) und dem Gehäuseeinsatz (13) befindlich ist, insbesondere zwischen dem Gehäusekörper (12) und dem Gehäuseeinsatz (13) randseitig eingeklemmt ist, bevorzugterweise derart dass der Gehäuseeinsatz (13) im wesentlichen abgedichtet am Gehäusekörper (12) befestigt ist.

4. Messvorrichtung nach Anspruch 1, 2 oder 3, **dadurch gekennzeichnet, dass** die Kammer (3) sowie gegebenenfalls der Zuführ- und/oder der Abführanschluss (5, 6) im Gehäuseeinsatz (13) in der Art einer Strömungskammer angeordnet ist, dass vorzugsweise der Signalaufnehmer (9) im Gehäusekörper (12), insbesondere auf einer Leiterplatte (11), angeordnet ist, und dass weiter vorzugsweise mit dem Signalaufnehmer (9) eine Auswerteelektronik, die insbesondere einen Mikrocontroller, einen Mikroprozessor o. dgl. umfasst, in elektrischer Verbindung steht, bevorzugterweise im Signalaufnehmer (9) in der Art eines ASIC's integriert ist.

5. Messvorrichtung nach einem der Ansprüche 1 bis 4, **dadurch gekennzeichnet, dass** die Kammer (3) eine im wesentlichen zylinderförmige Gestalt besitzt, dass vorzugsweise der Zuführ- sowie der Abführanschluss (5, 6) an der Mantelfläche (22) des Zylinders, insbesondere einander mit einem Winkel von in etwa 180° gegenüberliegend, angeordnet sind, und dass weiter vorzugsweise die Membran (7) an der einen, dem Gehäusekörper (12) zugewandten Deckelfläche (20) des Zylinders angeordnet ist.

6. Messvorrichtung nach einem der Ansprüche 1 bis 5, **dadurch gekennzeichnet, dass** der Strömungsteiler (10) als eine in der Kammer (3) angeordnete Ausbauchung (19) ausgestaltet ist, dass vorzugsweise die Ausbauchung (19) von der anderen, dem Gehäusekörper (12) abgewandten Deckelfläche (21) des Zylinders abragt, und dass weiter vorzugsweise die Ausbauchung (19) eine kuppelartige Gestalt besitzt, insbesondere derart dass die Teilströmungen (4', 4") die Membran (7) und/oder die Kammer (3) im wesentlichen ringförmig umspülen.

7. Messvorrichtung nach einem der Ansprüche 1 bis 6, **dadurch gekennzeichnet, dass** der Strömungsteiler (10) eine in die Kammer (3) ragende Rippe umfasst, und dass vorzugsweise die Rippe (23) an der Ausbauchung (19) angeordnet ist, insbesondere derart dass die Rippe (23) im wesentlichen in Verlängerung des Zuführanschlusses (5) ausgerichtet ist sowie gegegebenenfalls eine dem Zuführanschluss (5) zugewandte Kante (17) aufweist.

8. Messvorrichtung nach einem der Ansprüche 1 bis 7, **dadurch gekennzeichnet, dass** der Strömungsteiler (10) eine weitere, dem Abführanschluss (6) zugeordnete Rippe (24, 24') umfasst, dass vorzugsweise die weitere Rippe (24, 24') an der Ausbauchung (19) angeordnet ist, dass weiter vorzugsweise die weitere Rippe (24, 24') winklig zur Verlängerung des Abführanschlusses (6) ausgerichtet ist, insbesondere derart dass die Rippe (23) und die weitere Rippe (24, 24') eine Art von sternförmigen Diffusor für die Teilströmungen (4', 4") bilden, so dass die Teilströmungen (4', 4") die Membran (7) und/oder die Kammer (3) im wesentlichen vollständig umspülen.

9. Messvorrichtung nach einem der Ansprüche 1 bis 8, **dadurch gekennzeichnet, dass** der Strömungsteiler (10) wenigstens einen der Membran (7) zugewandten Auflagepunkt (18), insbesondere drei Auflagepunkte (18) an den Rippen (23, 24, 24'), aufweist, derart dass die Membran (7) an dem Auflagepunkt (18) bei negativem Druck in ihrem Hub begrenzt wird.

## Claims

1. A measurement device (1) for measuring a measurement parameter of a fluid, in particular a pressure sensor for measuring the pressure of the fluid, comprising a housing (2), a flow chamber (3) for the fluid located in the housing (2), a feed connection (5) on the flow chamber (3) for feeding the fluid (4) into the chamber and a discharge connection (6) on the flow chamber (3) for discharging the fluid from the chamber (3), and a membrane (7) located in and/or on the chamber (3), wherein the fluid in the chamber (3) acts in a displacing manner on the membrane (7), wherein a signal transmitter (8) is operatively connected to the membrane (7) and wherein a signal receiver (9) cooperates with the signal transmitter (8) in such a way that a signal corresponding to the displacement of the membrane (7) can be generated by the signal receiver (9), **characterised in that** a flow divider (10) is arranged in the chamber (3) for dividing the fluid flowing into the chamber (3) from the feed connection (5) into at least two partial flows (4', 4") such that the partial flows (4', 4") wash around the membrane (7) and/or the chamber (3) when flowing through the chamber (3).

2. The measurement device according to claim 1, **characterised in that** the signal transmitter (8) consists of a magnet, **in that** the signal receiver (9) preferably consists of a position sensor, in particular a Hall sensor, and **in that** the membrane (7) and/or the signal transmitter (8) can be reset by means of a resilient element (15) designed in the form of a leaf spring, which is formed in particular as a flat spiral spring.

3. The measurement device according to claim 1 or 2, **characterised in that** the housing (2) consists of a housing body (12) in the form of a base and a housing insert (13) in the form of a cover, **in that** the housing insert (13) is preferably attached to the housing body (12) by means of a latching and/or snap-on connection, and **in that** the membrane (7) is also preferably located at the transition between the housing body (12) and the housing insert (13), in particular is clamped in at the edge between the housing body (12) and the housing insert (13), preferably in such a way that the housing insert (13) is attached substantially sealed on the housing body (12).

4. The measurement device according to claim 1, 2 or 3, **characterised in that** the chamber (3) and optionally the feed and/or discharge connection (5, 6) is arranged in the housing insert (13) in the form of a flow chamber, **in that** the signal receiver (9) is preferably arranged in the housing body (12), in particular on a circuit board (11), and **in that** an evaluation electronics, in particular comprising a microcontroller, a microprocessor or the like, is also preferably electrically connected to the signal receiver (9), preferably integrated in the signal receiver (9) in the form of an ASIC.

5. The measurement device according to one of claims 1 to 4, **characterised in that** the chamber (3) has a substantially cylindrical shape, **in that** the feed and discharge connections (5, 6) are preferably arranged on the peripheral surface (22) of the cylinder, in particular opposite each other at an angle of approximately 180°, and **in that** the membrane (7) is also preferably arranged on a cover surface (20) of the cylinder facing the housing body (12).

6. The measurement device according to one of claims 1 to 5, **characterised in that** the flow divider (10) is designed as a bulge (19) arranged in the chamber (3), **in that** the bulge (19) preferably protrudes from the other cover surface (21) of the cylinder facing away from the housing body (12), and **in that** the bulge (19) also preferably has a dome shape, in particular such that the partial flows (4', 4") wash around the membrane (7) and the chamber (3) in a substantially toroidal manner.

7. The measurement device according to one of claims 1 to 6, **characterised in that** the flow divider (10) comprises a rib protruding into the chamber (3), and **in that** the rib (23) is preferably arranged on the bulge (19), in particular such that the rib (23) is orientated substantially in the extension of the feed connection (5) and optionally comprises an edge (17) facing the feed connection (5).

8. The measurement device according to one of claims 1 to 7, **characterised in that** the flow divider (10) comprises a further rib (24, 24') facing the discharge connection (6), **in that** the further rib (24, 24') is preferably arranged on the bulge (19), **in that** the further rib (24, 24') is also preferably orientated at an angle to the extension of the discharge connection (6), in particular such that the rib (23) and the further rib (24, 24') form a type of star-shaped diffuser for the partial flows (4', 4") so that the partial flows (4', 4") substantially wash completely around the membrane (7) and/or the chamber (3).

9. Measurement device according to one of claims 1 to 8, **characterised in that** the flow divider (10) comprises at least one contact point (18) facing the membrane (7), in particular comprises three contact points (18) on the ribs (23, 24, 24'), such that the membrane (7) is confined on the contact point (18) when there is a negative pressure in its hub.

## Revendications

1. Dispositif de mesure destiné à la mesure d'une grandeur de mesure d'un fluide, en particulier capteur de pression pour la mesure de la pression du fluide, comprenant un boîtier (2), une chambre (3) se trouvant dans le boîtier (2) pour le fluide (4), un raccord d'amenée (5) contre la chambre pour l'amenée du fluide (4) dans la chambre (3) ainsi qu'un raccord d'évacuation (6) contre la chambre (3), pour l'évacuation du fluide (4) de la chambre (3), et une membrane (7), disposée dans et/ou contre la chambre (3), le fluide se trouvant dans la chambre (3) agissant sur la membrane (7) en la déviant, un émetteur de signaux (8) étant en liaison fonctionnelle avec la membrane (7), et un récepteur de signaux (9) coopérant avec l'émetteur de signaux (8) de façon que le récepteur de signaux (9) puisse produire un signal correspondant à la déviation de la membrane (7), **caractérisé en ce qu'**un diviseur d'écoulement (10) est disposé dans la chambre (3) pour subdiviser en au moins deux écoulements partiels (4',4") l'écoulement de fluide (4) pénétrant dans la chambre (3) à partir du raccord d'amenée (5), de telle sorte que les écoulements partiels (4',4") baignent la membrane (7) et/ou la chambre (3) lors du passage de la chambre (3).

2. Dispositif de mesure selon la revendication 1, **caractérisé en ce que** l'émetteur de signaux (8) est constitué d'un aimant, que de préférence le récepteur de signaux (9) est constitué d'un capteur de position, en particulier d'un capteur Hall, et que la membrane (7) et/ou l'émetteur de signaux (8) peuvent être repositionnés à l'aide d'un élément élastique (15), réalisé à la manière d'un ressort à lames, qui en particulier est conçu comme un ressort spirale plat.

3. Dispositif de mesure selon la revendication 1 ou 2, **caractérisé en ce que** le boîtier (2) est constitué d'un corps de boîtier (12) à la manière d'un socle et d'un insert de boîtier (13) à la manière d'un couvercle, que de préférence l'insert de boîtier (13) est, par une liaison par encliquetage et/ou par déclic, fixé au corps de boîtier (12), et qu'en outre de préférence la membrane (7) se trouve au niveau de la transition entre le corps de boîtier (12) et l'insert de boîtier (13), en particulier est serré, par ses bords, entre le corps de boîtier (12) et l'insert de boîtier (13), de préférence de telle sorte que l'insert de boîtier (13) soit fixé pour l'essentiel avec étanchéité contre le corps de boîtier (12).

4. Dispositif de mesure selon la revendication 1, 2 ou 3, **caractérisé en ce que** la chambre (3) ainsi qu'éventuellement les raccords d'amenée et/ou d'évacuation (5, 6) sont disposés dans l'insert de boîtier (13) à la manière d'une chambre d'écoulement, que de préférence le récepteur de signaux (9) est disposé dans le corps de boîtier (12), en particulier sur une carte imprimée (11), et qu'en outre de préférence une électronique d'évaluation, qui en particulier comprend un microcontrôleur, un microprocesseur ou analogues, est en liaison électrique avec le récepteur de signaux (9), et de préférence est intégré dans le récepteur de signaux (9) à la manière d'un ASIC.

5. Dispositif de mesure selon l'une des revendications 1 à 4, **caractérisé en ce que** la chambre (3) possède une forme pour l'essentiel cylindrique, que de préférence le raccord d'amenée, ainsi que le raccord d'évacuation (5, 6), sont disposés contre la surface latérale (22) du cylindre, en particulier opposés l'un à l'autre en faisant un angle d'environ 180°, et qu'en outre de préférence la membrane (7) est disposée contre l'une des surfaces de couvercle (20), dirigée vers le corps de boîtier (12), du cylindre.

6. Dispositif de mesure selon l'une des revendications 1 à 5, **caractérisé en ce que** le diviseur d'écoulement (10) est réalisé sous forme d'un bombement (19), disposé dans la chambre (3), que de préférence le bombement (19) dépasse de l'autre surface de couvercle (21), opposée au corps de boîtier (12), du cylindre, et qu'en outre de préférence le bombement (19) possède une forme en coupole, en particulier de telle sorte que les écoulements partiels (4', 4") baignent pour l'essentiel d'une manière annulaire la membrane (7) et/ou la chambre (3).

7. Dispositif de mesure selon l'une des revendications 1 à 6, **caractérisé en ce que** le diviseur d'écoulement (10) comprend une nervure dépassant à l'intérieur de la chambre (3), et que de préférence la nervure (23) est disposée contre le bombement (19), en particulier de telle sorte que la nervure (23) soit pour l'essentiel dirigée dans le prolongement du raccord d'amenée (5), et présente éventuellement une arête (17) dirigée vers le raccord d'amenée (5).

8. Dispositif de mesure selon l'une des revendication 1 à 7, **caractérisé en ce que** le diviseur d'écoulement (10) comprend une nervure supplémentaire (24, 24'), affectée au raccord d'amenée (6), que de préférence la nervure supplémentaire (24, 24') est disposée contre le bombement (19), qu'en outre de préférence la nervure supplémentaire (24, 24') est orientée en faisant un angle avec le prolongement du raccord d'évacuation (6), en particulier de telle sorte que la nervure (23) et la nervure supplémentaire (24, 24') forment un type de diffuseur en étoile pour les écoulements partiels (4', 4"), de telle sorte que les écoulements partiels (4', 4") baignent pour l'essentiel complètement la membrane (7) et/ou la chambre (3).

9. Dispositif de mesure selon l'une des revendications 1 à 8, **caractérisé en ce que** le diviseur d'écoulement (10) présente au moins un point d'appui (18) dirigé vers la membrane (7), en particulier trois points d'appui (18) contre les nervures (23, 24, 24'), de telle sorte que la membrane (7) soit, dans sa course, limitée contre le point d'appui (18) en présence d'une pression négative.
